# FASCICULE DE BREVET EUROPEEN

(11) **EP 3 166 776 B1**
(45) Date de publication et mention de la délivrance du brevet: **11.09.2019**
(21) Numéro de dépôt: 15748278.7
(22) Date de dépôt: 02.07.2015
(51) Int. Cl.: B29C 70/84, B29L 31/30, B29C 70/44, B29C 70/48, B29C 31/08, B29C 35/02, B29C 65/00, B29C 70/08

(54) **PROCEDE DE FABRICATION DE PIECE EN MATERIAU COMPOSITE COMPORTANT AU MOINS UNE PORTION FORMANT PORTION D'INTRODUCTION D'EFFORT OU SUREPAISSEUR LOCALE**
VERFAHREN ZUR HERSTELLUNG EINES TEILS AUS EINEM VERBUNDSTOFF MIT MINDESTENS EINEM TEIL ZUR BILDUNG EINES KRAFTEINSETZTEILS ODER LOKALEN VERDICKTEN TEILS
METHOD FOR MANUFACTURING A PART MADE OF A COMPOSITE MATERIAL COMPRISING AT LEAST ONE PORTION FORMING A FORCE-INSERTION PORTION OR LOCAL THICKENED PORTION

(30) Priorité: 07.07.2014 FR 1456524
(43) Date de publication de la demande: 17.05.2017
(73) Titulaire: SAFRAN, 75015 Paris (FR)
(72) Inventeur: MANDEL, Robin, F-75012 Paris (FR); DUNLEAVY, Patrick, F-91120 Palaiseau (FR); TROUSSET, Emilie, F-92240 Malakoff (FR)
(74) Mandataire: Desormiere, Pierre-Louis
(86) Numéro de dépôt international: PCT/FR2015/051837
(87) Numéro de publication internationale: WO 2016/005686

(56) Documents cités:
- EP-A1- 2 266 784
- WO-A1-2013/089598
- FR-A1- 2 981 002
- US-A- 4 100 241
- US-A- 5 417 385
- US-A1- 2004 051 005
- US-A1- 2005 064 134
- US-A1- 2006 208 393
- US-A1- 2008 075 942
- US-A1- 2009 252 921
- US-B1- 6 479 124

## Description

### Arrière-plan de l'invention

La présente invention concerne la fabrication de pièces en matériau composite comprenant un renfort fibreux densifié par une matrice, ces pièces devant réaliser des transferts d'efforts de manière locale, comme notamment les cadres avant de nacelle de moteur aéronautique, les poutres d'inverseur de nacelle et les supports de vérins, etc.

Des exemples d'application de l'invention concernent les pièces destinées à être soumises localement à des chargements mécaniques, en particulier en dehors du ou des plans de résistance d'un corps principal de la pièce, et les pièces destinées à être soumises à des efforts de matage, et plus généralement à la transmission d'effort à une fixation.

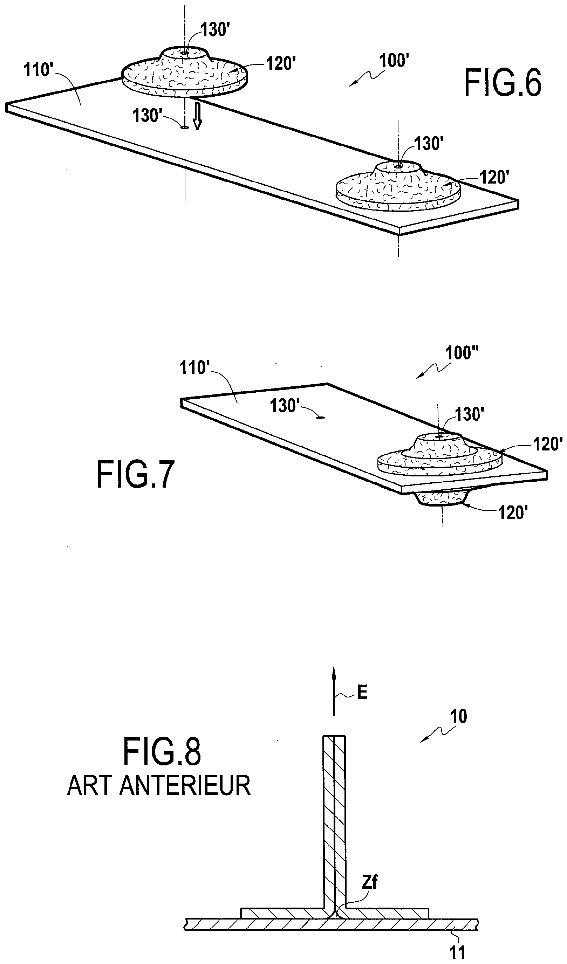

La figure 8 illustre un exemple d'une pièce 10 en matériau composite destinée à être soumise localement à des chargements mécaniques, cette pièce 10 comportant un corps principal, correspondant ici à une peau d'aile d'avion 11 et un raidisseur 12 en forme de T fixé sur la peau 11. Les deux sous-ensembles de la pièce 10, à savoir la peau d'aile d'avion 11 et le raidisseur 12, sont chacun réalisés à partir d'une texture en fibres continues, obtenue par exemple par drapage ou tissage 2D, les fibres de la texture étant pré-imprégnées avec une résine thermodurcissable. La liaison entre le raidisseur 12 et la peau 11 est réalisée par co-cuisson, les préformes fibreuses pré-imprégnées du raidisseur et de la peau étant plaquées l'une contre l'autre lors de la cuisson en étuve ou en autoclave.

Cependant, malgré la réalisation d'une liaison entre la peau 11 et le raidisseur 12, ce dernier présente une faible résistance vis-à-vis des efforts d'arrachage représentés par la flèche E sur la figure 8. En effet, la pièce 10 présente au niveau de sa liaison entre le raidisseur 12 et la peau 11 une zone faiblesse Zf correspondant à la zone dans laquelle le raidisseur 12 présente un rayon de courbure important par rapport à la surface de la peau 11 sur laquelle il est collé. Cette zone Zf qui est riche en résine et dépourvue de fibres affaiblit la liaison entre le raidisseur et la peau notamment vis-à-vis des efforts d'arrachage exercés sur le raidisseur.

Aussi, il existe un besoin pour disposer d'une solution permettant de réaliser, par assemblage de sous-ensembles, des pièces en matériau composite de géométrie complexe qui ne comportent pas de zones de faiblesse au niveau de l'interface de liaison entre les sous-ensembles de la pièce.

Le document FR 2981002 divulgue un procédé de réalisation d'un panneau raidi extrudé et un dispositif de mise en oeuvre. Le document EP 2266784 divulgue une méthode pour produire un composant en sandwich ayant un coeur en nids d'abeilles. Le document US 2006/208393 divulgue des composites renforcés par des fibres en tant que matériaux dentaires. Le document US 2009/252921 divulgue une méthode pour produire un composant en sandwich ayant un coeur en nids d'abeilles. Le document US 4,100,241 divulgue une méthode pour fabriquer un corps courbé en plastique renforcé par des fibres. Le document US 2005/064134 divulgue un dispositif, un système et un procédé pour joindre deux éléments structurels avec un joint de liaison effilé.

### Objet et résumé de l'invention

A cet effet, selon l'invention, il est proposé un procédé de fabrication d'une pièce en matériau composite comprenant les étapes suivantes:
- pré-compactage suivant une forme déterminée d'un mélange d'une première résine thermodurcissable avec des fibres longues discontinues de manière à former une première préforme,
- pré-cuisson de la première préforme jusqu'à un stade de conversion intermédiaire de la première résine thermodurcissable correspondant à une solidification de ladite première résine,
- accostage de la première préforme avec une deuxième préforme comprenant une texture fibreuse de fibres continues imprégnées avec une deuxième résine thermodurcissable,
- polymérisation des première et deuxième préformes de manière à former une pièce en matériau composite comprenant un corps en matériau composite comprenant un renfort en fibres continues consolidé par une matrice organique muni d'une portion en matériau composite comprenant un renfort en fibres longues discontinues consolidé par une matrice organique.

Ainsi, en utilisant un mélange de fibres longues discontinues et d'une résine thermodurcissable, il est possible de réaliser un ou plusieurs sous-ensembles d'une pièce en matériau composite suivant des géométries complexes qui s'adaptent parfaitement à la géométrie du ou des autres sous-ensembles de la pièce réalisés à partir de fibres continues. On réalise de cette manière des pièces en matériau composite formées par assemblage de sous-ensembles avec des interfaces de liaison homogènes entre les sous-ensembles. La pièce obtenue présente une résistance mécanique accrue même lorsqu'un premier sous-ensemble de celle-ci réalisé à partir de fibres longues discontinues est soumis à des chargements appliqués dans une direction différente du ou des plans de résistance d'un deuxième sous-ensemble réalisé à partir de fibres continues et sur lequel est fixé le premier sous-ensemble.

Selon un aspect particulier du procédé de l'invention, les première et deuxième résines sont identiques. Dans ce cas, les première et deuxième résines sont choisies parmi au moins les résines de type époxy compatibles avec les applications pré-imprégnées telles que les produits Hexcel M21, Hexcel 8552, Hexcel M42, Cytec Cycom 977-B, Hexcel M77, les résines de type cyanate-ester et les résines polybismaléimides (BMI).

Selon un autre aspect particulier de l'invention, les première et deuxième résines sont différentes. Dans ce cas, elles peuvent être notamment chacune choisies parmi au moins les résines de type époxy compatibles avec les applications pré-imprégnées telles que les produits Hexcel M21, Hexcel 8552, Hexcel M42, Cytec Cycom 977-B, Hexcel M77, les résines de type cyanate-ester et les résines polybismaléimides (BMI).

Selon une application particulière de l'invention à la réalisation d'une pièce en matériau composite soumise à des efforts de matage, le procédé comprend en outre une étape de perçage du corps et de la portion de la pièce en matériau composite pour y faire passer une vis de fixation.

La présente invention a également pour objet une pièce de structure comprenant un corps en matériau composite comprenant un renfort en fibres continues densifié par une première matrice organique et au moins une portion comprenant un renfort en fibres longues discontinues densifié par une deuxième matrice organique, ladite portion comprenant au moins une surface en contact continu avec le corps de la pièce.

L'interface de liaison entre la portion et le corps principal étant homogène et continue (pas de zone riche en résine et dépourvue de fibres au niveau de l'interface interface et contact continu entre les deux sous-ensembles tout le long de l'interface), la portion peut être soumise à des chargements mécaniques et des efforts de matage et transférer au corps principal les efforts issus de ces chargements sans risque de rupture de la liaison entre la portion et le corps, et ce même lorsque les chargements sont appliqués sur la pièce dans une direction différente de celle du ou des plans de résistance du corps qui sont définis par l'orientation des fibres continues dans le renfort de celui-ci.

Selon un aspect particulier de la pièce de l'invention, les première et deuxième matrices organiques sont formées à partir d'une même résine thermodurcissable.

Selon un autre aspect particulier de la pièce de l'invention, les première et deuxième matrices organiques sont formées à partir de résines thermodurcissables différentes.

Dans le cas d'une pièce devant réaliser des transferts d'efforts de manière locale, la portion peut former une portion d'introduction d'efforts.

Alternativement, dans le cas d'une pièce en matériau composite soumise à des efforts de matage, la portion peut former une surépaisseur locale du corps. Cette surépaisseur locale permet ainsi d'augmenter localement la section de la pièce afin d'améliorer sa tenue aux efforts de matage sans pour autant ajouter de la masse sur l'ensemble de la structure.

Dans ce cas, le corps et la surépaisseur locale peuvent chacun être munis de perçages qui sont alignés l'un avec l'autre pour le passage de vis de fixation. De même, la pièce peut comprendre un corps et deux surépaisseurs locales ayant chacune une surface en contact continu avec une face différente du corps de la pièce.

La pièce selon l'invention peut notamment correspondre à une pièce de structure d'aéronef choisie parmi au moins une des pièces suivantes : cadre avant de nacelle de moteur aéronautique, poutre d'inverseur de nacelle et support de vérins.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective d'une pièce de structure en matériau composite conformément à un mode de réalisation de l'invention,
- la figure 2 est une vue en perspective d'une préforme de portion d'introduction d'efforts de la pièce de la figure 1,
- la figure 3 est une vue en perspective d'une préforme de corps principal de la pièce de la figure 1,
- la figure 4 est une en perspective éclatée montrant l'accostage de la préforme de portion d'introduction d'efforts de la figure 2 avec la préforme de corps principal de la figure 3,

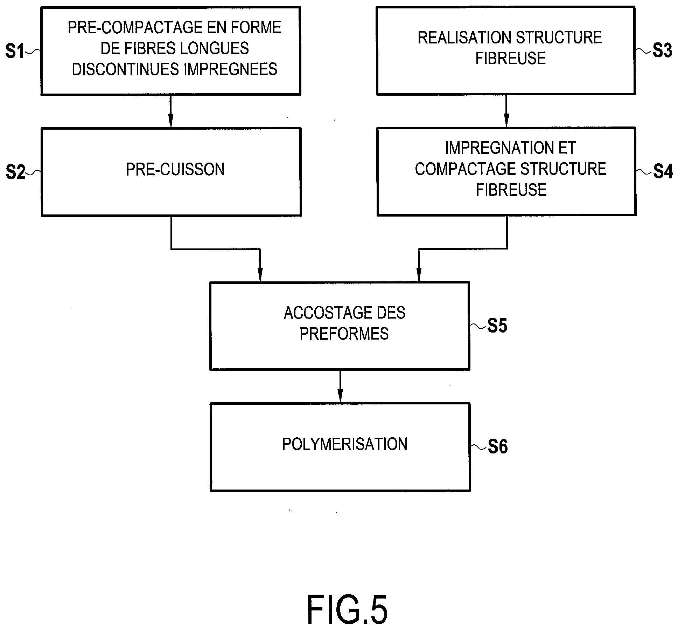

- la figure 5 est un ordinogramme des étapes mises en oeuvre dans un procédé de fabrication de la pièce de la figure 1 conformément à un mode de réalisation de l'invention,
- la figure 6 est une vue en perspective d'une pièce de structure en matériau composite conformément à un autre mode de réalisation de l'invention,
- la figure 7 est une vue en perspective de la pièce de structure de la figure 6 selon une variante de réalisation, et
- la figure 8 est vue en coupe d'une pièce en matériau composite selon l'art antérieur.

### Description détaillée de modes de réalisation

L'invention s'applique d'une manière générale à la réalisation de pièces en matériau composite comprenant un renfort fibreux densifié par une matrice organique, ladite pièce comprenant un corps principal sur lequel sont présents un ou plusieurs portions, chacune de ces portions pouvant être utilisée pour introduire localement des efforts dans la pièce ou pour réaliser une transmission d'efforts à une fixation sur une autre pièce.

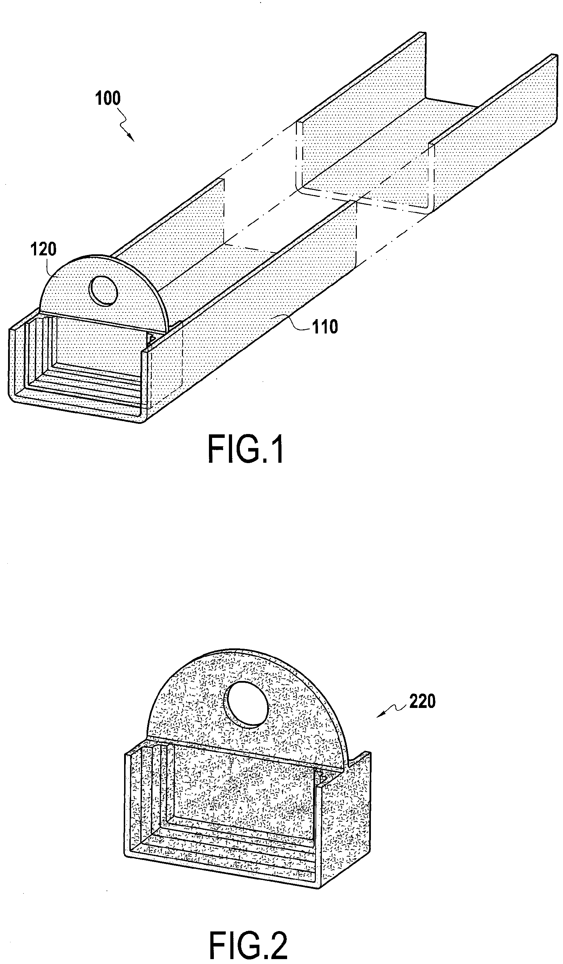

La figure 1 illustre une pièce 100 correspondant à une pièce générique de structure composite et comprenant un corps principal 110 présentant une forme élancée et une portion 120 formant ici portion d'introduction d'efforts. La portion 120 est notamment destinée à être soumise localement à des chargements mécaniques qui peuvent être appliqués dans des directions différentes de celle du ou des plans de résistance du corps principal défini par l'orientation des fibres continues dans le renfort de ce dernier. La portion 120 peut être notamment en liaison avec un dispositif, par exemple un vérin, ou une autre pièce introduisant des efforts de manière locale dans la pièce 100 au niveau de la portion 120.

Ces deux sous-ensembles sont réalisés en matériau composite comprenant un renfort fibreux densifié par une matrice organique. Toutefois, conformément à l'invention et comme expliqué ci-après en détails, le renfort fibreux du corps principal 110 est constitué de fibres continues tandis que le renfort fibreux de la portion d'introduction locale d'effort 120 est constitué de fibres longues discontinues.

La fabrication de la pièce 100 débute par la réalisation d'une préforme 220 de la portion d'introduction locale d'effort 120 (figure 2). La préforme 120 est obtenue par pré-compactage de fibres longues discontinues pré-imprégnées avec une résine thermodurcissable. Les fibres longues discontinues présentent une longueur comprise entre 8 et 100mm. Les fibres peuvent être en un des matériaux suivants : verre, carbone, métal, céramique. Les fibres peuvent être formées par extrusion ou micro-pultrusion d'un filament découpé en tronçons de longueur équivalente ou aléatoire. Pour les fibres de carbone ou de céramique, on peut utiliser un précurseur polymère de carbone ou céramique (début de filière de fibre) qui est déposé sur un plateau suivant la longueur des fibres que l'on souhaite obtenir et traité thermiquement de façon connue pour obtenir des fibres de carbone ou de céramique. Dans le cas de fibres métalliques ou de verre, celles-ci peuvent être découpées dans un bloc de matière. Pour les matières de fibres adaptées, celles-ci peuvent être encore formées par estampage ou compression de nappe unidirectionnelle ou par électroformage sur un poinçon en forme.

Les fibres longues discontinues peuvent être pré-imprégnées avec la résine thermodurcissable de manière individuelle, c'est-à-dire lors de leur réalisation, ou collectivement en imprégnant une quantité déterminée de fibres sèches avec la résine thermodurcissable.

Une fois pré-imprégnées, les fibres longues discontinues sont pré-compactées dans un moule suivant une forme correspondant à la forme finale de la portion d'introduction d'efforts 120 (étape S1).

Les fibres pré-compactées en forme sont alors soumises à un traitement de pré-cuisson (étape S2). Par « pré-cuisson », on entend ici un traitement thermique de la résine thermodurcissable permettant d'amener la résine thermodurcissable à une conversion intermédiaire correspondant à une pré-polymérisation de la résine qui présente une phase solide suffisante pour obtenir une préforme 220 apte à conserver une forme proche de la géométrie finale de la portion d'introduction d'efforts 120. Cette pré-cuisson est obtenue en chauffant la résine à une température permettant d'initier la polymérisation de la résine et sur une durée permettant de maintenir les fibres longues discontinues dans leur état compactée. Le niveau d'avancement permettant d'obtenir une préforme suffisamment rigide est fonction de la géométrie de la pièce et peut être estimé entre 15% et 50% de taux de polymérisation.

On procède ensuite à la réalisation d'une préforme 210 destinée à former ultérieurement le corps principal 110 de la pièce 100 qui débute par la formation d'une structure fibreuse destinée à former le renfort fibreux du corps principal 110 (étape S3).

Dans l'exemple décrit ici, la structure fibreuse est obtenue par empilement de strates de fibres continues qui peuvent se présenter sous forme de couche fibreuse unidirectionnelle, tissu, tresse, tricot, feutre, nappes ou autres. Les strates peuvent en outre être liées entre elles par exemple par couture, par implantation de fils ou d'éléments rigides ou par aiguilletage.

La structure fibreuse peut également être obtenue par tissage multicouche entre des fils de fibres continues. Ce tissage est réalisé de façon connue au moyen d'un métier à tisser de type jacquard sur lequel on a disposé un faisceau de fils de chaînes ou torons en une pluralité de couches, les fils de chaînes étant liés par des fils de trame. Le tissage multicouche peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure. D'autres types de tissage multicouche connus pourront être utilisés, comme notamment ceux décrits dans le document WO 2006/136755 dont le contenu est incorporé ici par voie de référence.

Les fibres continues constitutives de la structure fibreuse sont notamment des fibres réfractaires, c'est-à-dire des fibres en céramique, par exemple en carbure de silicium (SiC), des fibres en carbone ou même encore des fibres en un oxyde réfractaire, par exemple en alumine (Al₂O₃). Les fibres peuvent être également des fibres de verre ou métalliques. Dans l'exemple décrit ici, la structure fibreuse est réalisée à partir de strates fibreuses en fibres de carbone.

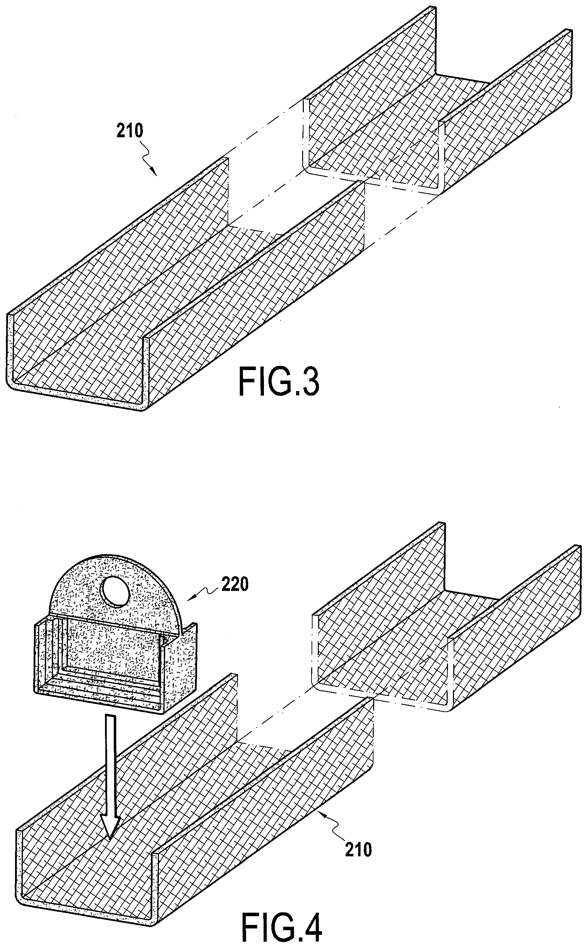

Une fois terminée, la structure fibreuse est imprégnée avec une résine thermodurcissable puis compactée en forme afin de l'ajuster à la forme finale du corps principal et d'augmenter le taux de fibre dans celui-ci (étape S4, figure 3). Selon une variante de mise en oeuvre du procédé de l'invention, la texture fibreuse destinée à former le renfort du corps principal 110 de la pièce 100 peut être réalisée à partir de fibres continues déjà imprégnées avec une résine destinée à former la matrice du corps principal.

La préforme 220 de la portion d'introduction d'efforts 120 est alors accostée avec la préforme 210 du corps principal 110 (étape S5, figure 4). On procède alors à la polymérisation de l'assemblage, c'est-à-dire, à la finalisation de la polymérisation de la résine de la préforme 220 et la polymérisation complète de la préforme 210 (étape S6). L'accostage et la polymérisation des préformes peuvent être réalisée de différentes manières. La préforme 220 peut être par exemple plaquée contre la préforme 210 lors d'une opération de moulage par compression de la préforme 210, la polymérisation pouvant être réalisée entièrement ou partiellement dans le moule ou à l'extérieur de celui-ci, par exemple dans une étuve post-cuisson.

Selon une variante de mise en oeuvre, la préforme 220 de la portion d'introduction d'efforts 120 peut être rapportée avant l'imprégnation de la structure fibreuse destinée à former le renfort du corps principal 110. Dans ce cas, la préforme 210 est une préforme dite « sèche » car elle ne comprend pas encore de résine thermoplastique, l'imprégnation de la préforme 210 et la polymérisation des préformes 210 et 220 pouvant être réalisées par le procédé bien connu de moulage par transfert dit RTM ("Resin Transfert Moulding"). Conformément au procédé RTM, on place la préforme fibreuse sèche 210 dans un moule présentant la forme du corps principal à réaliser avec un emplacement spécifique pour maintenir en position la préforme 220. Une résine thermodurcissable est injectée dans l'espace interne du moule qui comprend la préforme 210. Un gradient de pression est généralement établi dans cet espace interne entre l'endroit où est injecté la résine et les orifices d'évacuation de cette dernière afin de contrôler et d'optimiser l'imprégnation de la préforme par la résine. La polymérisation des préformes 210 et 220 peut être réalisée entièrement ou partiellement dans le moule ou à l'extérieur de celui-ci, par exemple dans une étuve post-cuisson.

Par « polymérisation des préformes », on entend ici un traitement thermique permettant d'initier un cycle de réticulation permettant de durcir (co-cuire) la première résine pré-cuite de la préforme 220 et la deuxième résine de la préforme 210 et de former, par conséquent, la matrice du matériau composite de la pièce 100. Pendant ce cycle de réticulation, des liaisons covalentes sont créées à l'interface entre les première et deuxième résines formant un réseau de points de réticulation homogène rendant cette interface mécaniquement résistante.

On obtient alors la pièce 100 de la figure 1 comprenant un corps principal 110 réalisé en matériau composite comprenant un renfort en fibres continues densifié par une première matrice organique et une portion d'introduction locale d'effort 120 réalisée en matériau composite comprenant un renfort en fibres longues discontinues, dit DLF (pour « Discontinuous Long Fiber ») et une deuxième matrice organique.

L'interface de liaison entre la portion 120 et le corps principal 110 étant homogène et continue (pas de zone riche en résine et dépourvue de fibres au niveau de l'interface interface et contact continu entre les deux sous-ensembles tout de l'interface), la portion 120 peut être soumise à des chargements mécaniques et transférer au corps 110 les efforts issus de ces chargements sans risque de rupture de la liaison entre la portion 120 et le corps 110, et ce même lorsque les chargements sont appliqués sur la pièce 120 dans une direction différente de celle du ou des plans de résistance du corps 110 qui sont définis par l'orientation des fibres continues dans le renfort de celui-ci.

Le procédé de l'invention est particulièrement adapté à la fabrication de pièce en matériau composite comprenant un corps principal de forme élancée (renfort en fibres continues assurant une bonne tenue mécanique dans le ou les plans d'élancement du corps) devant réaliser des transferts d'effort de manière locale au niveau de portions d'introduction d'efforts.

Les étapes S1 et S2 de fabrication de la portion 120 avant son accostage avec le corps principal et les étapes S3 et S4 de formation de la préforme de corps principal peuvent être bien entendu réalisées en parallèle.

Selon un aspect de l'invention, les résines thermodurcissables utilisées pour former respectivement l'élément d'introduction locale d'effort et le corps principal peuvent être identiques et choisies notamment parmi les résines thermodurcissables suivantes : les résines de type époxy compatibles avec les applications pré-imprégnées telles que les produits Hexcel M21, Hexcel 8552, Hexcel M42, Cytec Cycom 977-B, Hexcel M77, les résines de type cyanate-ester et les résines polybismaléimides (BMI).

Dans le cas de la résine Hexcel 8552 par exemple, la pré-cuisson s'effectue sous presse à une température de 180°C pendant 10 min en appliquant une pression comprise entre 20 et 100 bar sur la matière afin de lui faire atteindre son état final. La co-cuisson se déroule ensuite en suivant le cycle normal de polymérisation d'un stratifié de pré-imprégné, à savoir environ 2h à 180°C sous une pression usuellement comprise entre 3 et 10 bar (en autoclave par exemple)

Selon un autre aspect de l'invention, les résines thermodurcissables utilisées pour former respectivement l'élément d'introduction locale d'effort et le corps principal peuvent être différentes. Dans ce cas, les résines utilisées peuvent être notamment chacune choisies parmi au moins une des résines mentionnées ci-avant.

Dans le cas par exemple de deux résines époxy distinctes, la pré-cuisson s'effectue sous presse à une température située entre 120°C et 180°C pendant une durée comprise entre 5 et 15 min en appliquant une pression entre 20 et 100 bar sur la matière afin de lui faire atteindre son état final. Cette gamme est fonction de la nature de la résine ainsi que de la géométrie de la préforme.

La co-cuisson se déroule ensuite en suivant le cycle normal de polymérisation d'un stratifié de pré-imprégné, à savoir environ 2h à 120°C ou 180°C sous une pression usuellement comprise entre 3 et 10 bar (en autoclave par exemple). On utilisera de préférence des résines ayant des températures de polymérisation équivalentes.

La figure 6 illustre un autre mode de réalisation de l'invention dans lequel la pièce 100' correspond à une pièce de structure soumise à des efforts de matage. Cette pièce comprend un corps principal 110' de forme sensiblement plate et allongée et une ou plusieurs portions 120' qui forment ici des surépaisseurs locales du corps.

Les portions 120' et le corps sont notamment destinés à être traversés par des vis de fixation (non représentés sur la figure 6) pour la fixation sur la pièce 100' d'une autre pièce, par exemple un actionneur ou une chape tels qu'utilisés sur un système d'inversion de poussée comme décrit dans la publication FR 2,986,212. Aussi, les portions 120' sont soumises à des efforts de matage correspondant à la transmission des efforts aux fixations.

Le procédé de fabrication d'une telle pièce 100' est en tout point identique à celui précédemment décrit pour la fabrication de la pièce 100. En particulier, la pièce 100' obtenue comprend un corps principal 110' réalisé en matériau composite comprenant un renfort en fibres continues densifié par une première matrice organique et une ou plusieurs surépaisseurs locales 120' réalisées en matériau composite comprenant chacune un renfort en fibres longues discontinues, dit DLF (pour « Discontinuous Long Fiber ») et une deuxième matrice organique.

A l'issue du procédé de fabrication, des perçages 130' sont pratiqués au travers des portions 120' formant surépaisseurs locales et du corps principal 110' de la pièce pour y faire passer des vis de fixation (non représentés sur la figure). Ces perçages 130' sont de préférence usinés une fois que les portions sont assemblées sur le corps principal pour s'assurer que la contrainte soit uniformément répartie. Il est cependant possible de réaliser un pré-perçage à une côte inférieure des portions 120' avant leur assemblage afin de faciliter leur positionnement sur le corps principal.

La figure 7 illustre une variante de réalisation dans laquelle la pièce 100" présente deux portions 120' qui sont positionnées sur les deux faces opposées du corps principal 110' de la pièce au même endroit de celui-ci de sorte à former une double surépaisseur locale du corps principal. Ces portions et le corps principal sont ici aussi percés pour permettre le passage d'une vis de fixation (non représentée).

## Revendications

1. Procédé de fabrication d'une pièce en matériau composite comprenant les étapes suivantes:
- pré-compactage suivant une forme déterminée d'un mélange d'une première résine thermodurcissable avec des fibres longues discontinues de manière à former une première préforme (220),
- pré-cuisson de la première préforme (220) jusqu'à un stade de conversion intermédiaire de la première résine thermodurcissable correspondant à une solidification de ladite première résine,
- accostage de la première préforme (220) avec une deuxième préforme (210) comprenant une texture fibreuse de fibres continues imprégnées avec une deuxième résine thermodurcissable,
- polymérisation des première et deuxième préformes (220, 210) de manière à former une pièce en matériau composite (100 ; 100' ; 100") comprenant un corps (110 ; 110') en matériau composite comprenant un renfort en fibres continues consolidé par une matrice organique muni d'une portion (120 ; 120') en matériau composite comprenant un renfort en fibres longues discontinues consolidé par une matrice organique.

2. Procédé selon la revendication 1, **caractérisé en ce que** les première et deuxième résines sont identiques.

3. Procédé selon la revendication 2, **caractérisé en ce que** les première et deuxième résines sont choisies parmi au moins les résines suivantes : les résines de type époxy, les résines de type cyanate-ester et les résines polybismaléimides (BMI).

4. Procédé selon la revendication 2, **caractérisé en ce que** les première et deuxième résines sont différentes.

5. Procédé selon l'une quelconque des revendications 1 à 4, **caractérisé en ce qu'**il comprend en outre une étape de perçage du corps et de la portion de la pièce en matériau composite pour y faire passer une vis de fixation.

6. Pièce de structure (100 ; 100' ; 100") comprenant un corps (110 ; 110') en matériau composite comprenant un renfort en fibres continues densifié par une première matrice organique et au moins une portion (120 ; 120') comprenant un renfort en fibres longues discontinues densifié par une deuxième matrice organique, ladite portion (120 ; 120') comprenant au moins une surface en contact continu avec le corps de la pièce.

7. Pièce selon la revendication 6, **caractérisée en ce que** les première et deuxième matrices organiques sont formées à partir d'une même résine thermodurcissable.

8. Pièce selon la revendication 6, **caractérisée en ce que** les première et deuxième matrices organiques sont formées à partir de résines thermodurcissables différentes.

9. Pièce (100) selon l'une quelconque des revendications 6 à 8, **caractérisée en ce que** la portion forme une portion d'introduction d'efforts (120).

10. Pièce (100' ; 100") selon l'une quelconque des revendications 6 à 8, **caractérisée en ce que** la portion forme une surépaisseur locale du corps (120').

11. Pièce selon la revendication 10, **caractérisée en ce que** le corps et la surépaisseur locale sont chacun munis de perçages (130') qui sont alignés l'un avec l'autre pour le passage de vis de fixation.

12. Pièce (100") selon l'une des revendications 10 et 11, **caractérisée en ce qu'**elle comprend un corps (110') et deux surépaisseurs locales (120') ayant chacune une surface en contact continu avec une face différente du corps de la pièce.

13. Pièce selon l'une quelconque des revendications 6 à 12, **caractérisée en ce qu'**elle correspond à une pièce de structure d'aéronef choisie parmi au moins une des pièces suivantes : cadre avant de nacelle de moteur aéronautique, poutre d'inverseur de nacelle et support de vérins.

## Patentansprüche

1. Verfahren zur Herstellung eines Teils aus Verbundwerkstoff, umfassend die folgenden Schritte:
- Vorverdichten einer Mischung aus einem ersten wärmehärtbaren Harz mit langen Stapelfasern entsprechend einer bestimmten Form, um einen ersten Vorformling (220) zu bilden,
- Vorbrennen des ersten Vorformlings (220) bis zu einem Stadium einer Zwischenumwandlung des ersten wärmehärtbaren Harzes, die einer Verfestigung des ersten Harzes entspricht,
- Zusammenführen des ersten Vorformlings (220) mit einem zweiten Vorformling (210), der eine Faserstruktur aus Endlosfasern umfasst, die mit einem zweiten wärmehärtbaren Harz imprägniert sind,
- Polymerisieren des ersten und des zweiten Vorformlings (220, 210), um ein Verbundwerkstoffteil (100; 100'; 100") zu bilden, das einen Körper (110; 110') aus Verbundwerkstoff umfasst, der eine durch eine organische Matrix verfestigte Verstärkung aus Endlosfasern umfasst, welche mit einem Abschnitt (120; 120') aus Verbundwerkstoff, umfassend eine durch eine organische Matrix verfestigte Verstärkung aus langen Stapelfasern, versehen ist.

2. Verfahren nach Anspruch 1, **dadurch gekennzeichnet, dass** das erste und das zweite Harz identisch sind.

3. Verfahren nach Anspruch 2, **dadurch gekennzeichnet, dass** das erste und das zweite Harz aus wenigstens den folgenden Harzen ausgewählt sind: den Harzen vom Typ Epoxid, den Harzen vom Typ Cyanatester und den Polybismaleimid-Harzen (BMI).

4. Verfahren nach Anspruch 2, **dadurch gekennzeichnet, dass** das erste und das zweite Harz verschieden sind.

5. Verfahren nach einem der Ansprüche 1 bis 4, **dadurch gekennzeichnet, dass** es ferner einen Schritt zum Bohren des Körpers und des Abschnitts des Verbundwerkstoffteils zum Durchführen einer Befestigungsschraube umfasst.

6. Strukturteil (100; 100'; 100"), umfassend einen Körper (110; 110') aus Verbundwerkstoff, der eine Verstärkung aus Endlosfasern, welche durch eine erste organische Matrix verdichtet ist, umfasst, sowie wenigstens einen Abschnitt (120; 120'), der eine Verstärkung aus langen Stapelfasern, welche durch eine zweite organische Matrix verdichtet ist, umfasst, wobei der Abschnitt (120; 120') wenigstens eine Oberfläche in durchgehendem Kontakt mit dem Körper des Teils aufweist.

7. Teil nach Anspruch 6, **dadurch gekennzeichnet, dass** die erste und die zweite organische Matrix aus einem gleichen wärmehärtbaren Harz gebildet sind.

8. Teil nach Anspruch 6, **dadurch gekennzeichnet, dass** die erste und die zweite organische Matrix aus unterschiedlichen wärmehärtbaren Harzen gebildet sind.

9. Teil (100) nach einem der Ansprüche 6 bis 8, **dadurch gekennzeichnet, dass** der Abschnitt einen Krafteinleitungsabschnitt (120) bildet.

10. Teil (100'; 100") nach einem der Ansprüche 6 bis 8, **dadurch gekennzeichnet, dass** der Abschnitt eine lokale Überdicke des Körpers (120') bildet.

11. Teil nach Anspruch 10, **dadurch gekennzeichnet, dass** der Körper und die örtliche Überdicke jeweils mit Bohrungen (130') versehen sind, die für den Durchgang von Befestigungsschrauben miteinander fluchten.

12. Teil (100") nach einem der Ansprüche 10 und 11, **dadurch gekennzeichnet, dass** es einen Körper (110') und zwei lokale Überdicken (120') umfasst, die jeweils eine Oberfläche in durchgehendem Kontakt mit einer anderen Seite des Körpers des Teils aufweisen.

13. Teil nach einem der Ansprüche 6 bis 12, **dadurch gekennzeichnet, dass** es einem Strukturteil eines Luftfahrzeugs entspricht, das aus wenigstens einem der folgenden Teile ausgewählt ist: vorderer Rahmen einer Flugzeugtriebwerksgondel, Träger einer Gondelumkehrvorrichtung und Zylinderhalter.

## Claims

1. A method for manufacturing a part made of composite material comprising the following steps:
- pre-compacting to a predetermined shape of a mixture of a first thermosetting resin with discontinuous long fibers so as to form a first preform (220),
- pre-curing the first preform (220) until an intermediate conversion stage of the first thermosetting resin corresponding to a solidification of said first resin,
- contacting the first preform (220) with a second preform (210) comprising a fiber structure of continuous fibers impregnated with a second thermosetting resin,
- polymerization of the first and second preforms (220, 210) so as to form a part made of composite material (100; 100'; 100") comprising a body (110; 110') made of composite material comprising reinforcement made of continuous fibers consolidated by an organic matrix provided with a portion (120; 120') made of composite material comprising reinforcement made of discontinuous long fibers consolidated by an organic matrix.

2. The method according to claim 1, **characterized in that** the first and second resins are identical.

3. The method according to claim 2, **characterized in that** the first and second resins are selected from among at least the following resins: epoxy type resins, cyanate-ester type resins and polybismaleimide (BMI) type resins.

4. The method according to claim 2, **characterized in that** the first and second resins are different.

5. The method according to any one of claims 1 to 4, **characterized in that** it further comprises a step of drilling the body and the portion of the part made of composite material to allow passage of an attachment screw.

6. A structure part (100; 100'; 100") comprising a body (110; 110') made of composite material comprising reinforcement made of continuous fibers densified by a first organic matrix and at least one portion (120; 120') comprising reinforcement made of discontinuous long fibers densified by a second organic matrix, said portion (120; 120') comprising at least one surface in continuous contact with the body of the part.

7. The part according to claim 6, **characterized in that** the first and second organic matrices are formed from a same thermosetting resin.

8. The part according to claim 6, **characterized in that** the first and second organic matrices are formed from different thermosetting resins.

9. The part (100) according to any one of claims 6 to 8, **characterized in that** the portion forms a force-introduction portion (120).

10. The part (100'; 100") according to any one of claims 6 to 8, **characterized in that** the portion forms a local thickened portion of the body (120').

11. The part according to claim 10, **characterized in that** the body and the local thickened portion are each provided with bores (130') which are aligned one with the other for passage of an attachment screw.

12. The part (100") according to one of claims 10 and 11, **characterized in that** it comprises a body (110') and two local thickened portions (120') each having a surface in continuous contact with a different face of the body of the part.

13. The part according to any one of claims 6 to 12, **characterized in that** it corresponds to a structure part of an aircraft selected from among at least one of the following parts: front frame of the nacelle of an aircraft engine, reverser beam of the nacelle and ram support.
